# EUROPEAN PATENT APPLICATION

(11) **EP 3 501 449 A1**
(43) Date of publication of application: **26.06.2019**
(21) Application number: 18425091.8
(22) Date of filing: 30.11.2018
(51) Int. Cl.: A61C 8/00

(54) **DENTAL SURGICAL DEVICE COMPRISING A PNEUMATIC IMPLANT SCREW HAVING AN OUTER RING**

(30) Priority: 20.12.2017 IT 201700146966
(71) Applicant: Alonzi, Cosimo, 03026 Isolda del Liri (FR) (IT)
(72) Inventor: Alonzi, Cosimo, I-3026 Isola del Liri (FR) (IT); Alonzi, Lorenzo, I-3026 Isola del Liri (FR) (IT)

(57) **Abstract**

Dental surgical device (100), comprising a pneumatic implant screw having an outer ring, said pneumatic implant screw comprising:
- an *implant screw* (101), that is inserted into the dental arch bone of a patient;
- an element called *abutment* (104);
- an inner element, called *pneumatic abutment* (102) that, it is inserted at its lower side into said *implant screw* (101) and it is connected at its upper side to said *abutment* (104);
- an element, represented by a clamping screw, that connects said *abutment* (104) to said *pneumatic abutment* (102),
where said *pneumatic abutment* (102) has a proper length in order to be inserted deep into said *implant screw* (101), so that a balanced lever arm can be achieved, having a fulcrum placed close to the element between the abutment (104) and the *pneumatic abutment* (102), where the lever arm has a power component P approximately equal to 1/3 and a resistance component R approximately equal to 2/3, in respect to the length of all the dental surgical device (100),
where said element, connecting said *abutment* (104) to said *pneumatic abutment* (102), is represented by a first *nut and bolt system,* where the *pneumatic abutment* (102) presents at one end an outer radial thread (107) - working as a *nut,* to which a complementary inner radial thread (108) can be screwed, belonging to the abutment (104) and working as a *bolt,*
so that the two elements *pneumatic abutment* (102) and *abutment* (104) can be steadily connected and jointed each other, in order to increase the degree of stability and robustness of the structure,
characterized in that:
- said element, connecting the couple of said *abutment* (104) and *pneumatic abutment* (102) to said *screw implant* (101), is represented by a second *nut and bolt system* that is independent in respect to the first one, where the *screw implant* (101) presents at one end an outer radial thread (109) - working as a *nut,* to which a complementary inner radial thread (110) can be screwed, belonging to a ring (105) and working as a *bolt*;
the pneumatic abutment (102) presents a radial protruding element (111) on its outer surface, having a cross-section shaped as an hexagon, so that said *screw implant* (101) and ring (105) can be steadily connected and jointed each other, intercepting at the same time said protruding element (111) inside, keeping consequently the couple of said *abutment* (104) and *pneumatic abutment* (102) steadily inside, in order to increase the degree of stability and robustness of the structure.

## Description

The present invention regards a dental surgical device, comprising a pneumatic implant screw having an outer ring, particularly adapt to maintain a stable and strong structure, in front of intense outer forces, generated by the chewing activity.

As known, in the current dental surgical devices, the main components are essentially the following: a main body, called implant or *implant screw,* that is inserted into the dental arch bone of a patient; an inner element called *abutment,* that is inserted at its lower side into said *implant screw* and it is connected at its upper side to a second *abutment*; an element, preferably represented by a clamping screw, that connects said *abutment* to said second *abutment.*

As known from the prior art, document US 5890902 A discloses a fixing system, that blocks the implant screw stable into the dental arch bone of a patient; instead document US6939135 B2 describes a system that improves the stability of a clamp screw in respect to a long term use of the prosthesis.

In the state of the art, the main drawback is represented by the instability of the clamp screw, that tends to unscrew itself and, in the worst cases, even to break itself causing damage to the bone.

More exactly, the unscrewing of the clamp screw is strictly connected to the stability of a screw connection, that in turn depends not only on the screwing torque, but either on the adaptation between implant and fixing screw of the abutment. As a consequence, the unscrewing leads to an increasing of the damage to the screw itself.

The unscrewing of the screw is due to a progressive increase of the forces affecting the interface implant-abutment-screw, that leads to a decrease of the precharge (the connection force given at the moment of the initial screwing). The chewing activity, with its motion, generates transverse and vertical forces that push on the clamp screws, generating rotating moments. That leads to an opening of the *fixture-abutment* interface, and to serious and annoying rotary motions of the prosthesis structure.

In order to keep the screw connection stable, it is necessary to establish a proper precharge value during the product design, to achieve a high precision in the shape of the connection elements, and that the *fixture-abutment* interface implements a proper balance of the lever arms.

The clamp screw surely represents the most critical part of the implant in respect to a break down, because it has a smaller diameter in respect to that in the implant and in the abutment. It is subject of frequent damages especially at the two specific points where the forces are concentrated: at the point of variation of the cross-section size between fixture and abutment, and at the root of the first thread (where the main forces are concentrated).

The problem of unscrewing of screws is faced in mechanics by the following actions: the control of the screwing torque, the control of the angle between fixture and abutment, the use of means against the unscrewing, and a better distribution of forces in the structures.

Therefore, the main objective of the present invention is to propose a dental surgical device, having a monophasic *abutment* directed along a vertical direction, and having a balanced lever arm with a power component P approximately equal to 1/3 and a resistance component R approximately equal to 2/3.

Another objective of the present invention is to implement a mechanism in order to avoid rotary motion in the structure arising from its use, that could lead in the long term to the unscrewing of the implant in the bone tissue and/or the unscrewing, or break down, of the clamping screw between the implant and the abutment.

Another further objective of the present invention is to implement an additional mechanism that decreases the vertical and/or lateral forces that affect the whole device, by implementing a function similar to the natural one of the tooth, that has connective tissues around its roots (*periodontium*) absorbing forces generated from a chewing activity.

Therefore, it is specific subject of the present invention a dental surgical device, comprising a pneumatic implant screw having an outer ring, said pneumatic implant screw comprising:
- a main body, called *implant screw,* that is inserted into the dental arch bone of a patient;
- an element called *abutment;*
- an inner element, called *pneumatic abutment* that, it is inserted at its lower side into said *implant screw* and it is connected at its upper side to said *abutment;*
- an element, represented by a clamping screw, that connects said *abutment* to said *pneumatic abutment,*
where said *pneumatic abutment* has a proper length in order to be inserted deep into said *implant screw,* so that a balanced lever arm can be achieved, having a fulcrum placed close to the element between the abutment and the *pneumatic abutment,* where the lever arm has a power component P approximately equal to 1/3 and a resistance component R approximately equal to 2/3, in respect to the length of all the dental surgical device,
where said element, connecting said *abutment* to said *pneumatic abutment,* is represented by a first *nut and bolt system,* where the *pneumatic abutment* presents at one end an outer radial thread - working as a *nut,* to which a complementary inner radial thread can be screwed, belonging to the abutment and working as a *bolt,*
so that the two elements *pneumatic abutment* and *abutment* can be steadily connected and jointed each other, in order to increase the degree of stability and robustness of the structure,
characterized in that:
- said element, connecting the couple of said *abutment* and *pneumatic abutment* to said *screw implant,* is represented by a second *nut and bolt system* that is independent in respect to the first one, where the *screw implant* presents at one end an outer radial thread - working as a *nut,* to which a complementary inner radial thread can be screwed, belonging to a ring and working as a *bolt;*
the pneumatic abutment presents a radial protruding element on its outer surface, having a cross-section shaped as an hexagon, so that said screw implant and ring can be steadily connected and jointed each other, intercepting at the same time said protruding element inside, keeping consequently the couple of said abutment and pneumatic abutment steadily inside, in order to increase the degree of stability and robustness of the structure.

The present invention is now being described according to non limiting examples, with particular reference to the figures of the enclosed drawings, where:
**Figure 1** is a front-lateral perspective view of a dental surgical device, represented in a disassembled configuration according to the present invention;
**Figure 2** is a lateral cross-sectioned view of a dental surgical device, represented in an assembled configuration according to the prior art;
**Figure 3** is a lateral cross-sectioned view of a dental surgical device, as that of **Figure 1****,** represented in an assembled configuration according to the present invention;
**Figure 4** is a top view of a dental surgical device, as that of **Figure 1****,** represented in an assembled configuration;
**Figure 5** is a front-lateral perspective view of a dental surgical device, as that of **Figure 1****,** represented in an assembled configuration;
**Figure 6** is a lateral view of a dental surgical device, as that of **Figure 5****;**
**Figure 7** is a lateral cross-sectioned view of a dental surgical device, as that of **Figure 6****;**
**Figure 8** is a bottom view of a dental surgical device, as that of **Figure 5****;**
**Figure 9** represents respective lateral and top views of a component called *pneumatic abutment* of a dental surgical device, as that of **Figure 5****;**
**Figure 10** represents respective top and lateral views of a component called *pneumatic rubber plug* of a dental surgical device, as that of **Figure 5****;**
**Figure 11** represents respective top, lateral and bottom views of a component called *implant screw* of a dental surgical device, as that of **Figure 5****;**
**Figure 12** represents respective lateral and top views of a component called *abutment* of a dental surgical device, as that of **Figure 5****;**
**Figure 13** represents respective lateral and top views of a component called *closing gasket* of a dental surgical device, as that of **Figure 5****;**
**Figure 14** represents respective lateral cross-sectioned and top views of a component called *closing ring* of a dental surgical device, as that of **Figure 5****;**
**Figure 15** is a lateral view of respective components called *adapter for an allen wrench, closing ring,* and *implant screw* of a dental surgical device, as that of **Figure 5****;**
**Figure 16** is a bottom cross-sectioned view of the component called *adapter for an allen wrench* of a dental surgical device, as that of **Figure 5****;**
**Figure 17** is a top view of respective components called *closing ring,* and *closing gasket* of a dental surgical device, as that of **Figure 5****;**
**Figure 18** is a lateral rotated view of a dental surgical device, as that of **Figure 1****,** represented in an assembled configuration.

It is underlined that only few of the many conceivable embodiments of the present invention are here described, which are just some specific non-limiting examples, having the possibility to describe many other embodiments based on the disclosed technical solutions of the present invention.

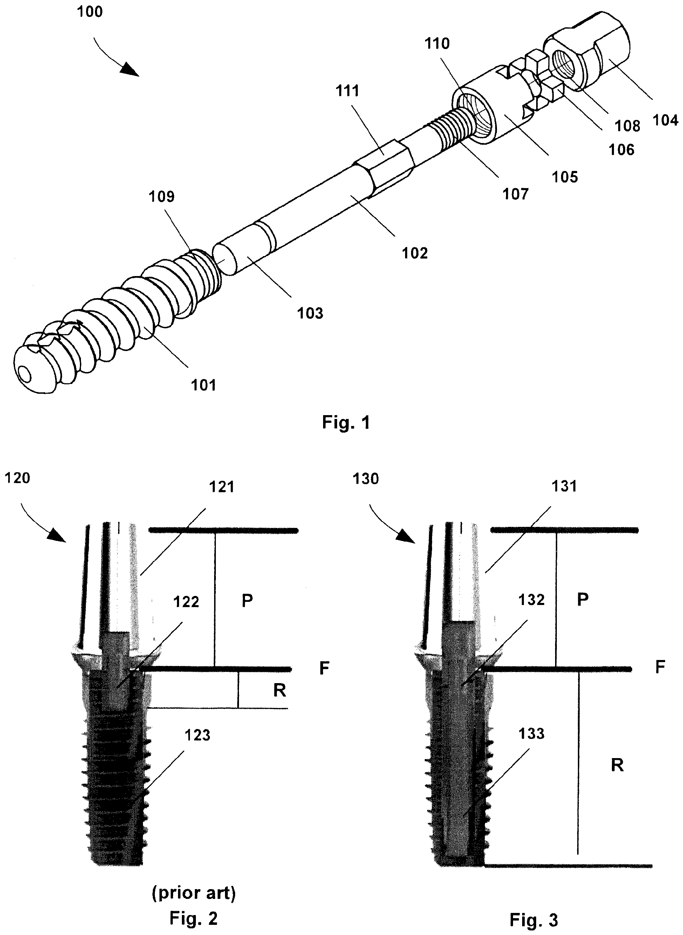

**Figure 2** shows a dental surgical device **120** according to the prior art. It comprises a main body, called *abutment* **122** that is partially inserted into an *implant screw* **123** and an unbalanced lever arm is achieved, having a fulcrum placed close to the jointing element between the *abutment* **122** and the *implant screw* **123,** where the lever arm has a power component P approximately equal to 2/3 and a resistance component R approximately equal to 1/3.

This structural configuration represents a particularly negative situation, where the chewing activity generates forces that affect strongly the whole implant, causing unscrewing, or break down, in the clamping screw, until serious damage could occur in the screwing housing into the bone.

Instead, **Figure 3** shows a dental surgical device **130** according to the present invention. It comprises a main body, called *pneumatic abutment* **132** that is inserted deep into an *implant screw* **133** so that a balanced lever arm can be achieved, having a fulcrum placed again close to the jointing element between the *pneumatic abutment* **132** and the *implant* **133,** where the lever arm has a power component P approximately equal to 1/3 and a resistance component R approximately equal to 2/3.

This structural configuration represents a particularly advantageous situation, where the whole device **130** results to be particularly adapt to maintain a stable and strong structure, in front of intense outer forces, generated by the chewing activity.

**Figure 1** shows the same dental surgical device **100** of the present invention, in a disassembled configuration, so that the single components are better visible.

There is a main body, called *implant screw* **101**, that is inserted into the dental arch bone of a patient. Furthermore, there is an inner element, called *pneumatic abutment* **102** that is inserted at its lower side into said *implant screw* **101** and it is connected at its upper side to an element called *abutment* **104.** In addition, there is a jointing element, preferably represented by a clamping screw, that connects said *abutment* **104** to said *pneumatic abutment* **102.** As above described, said *pneumatic abutment* **102** has a proper length in order to be inserted deep into said *implant screw* **101,** so that a balanced lever arm can be achieved, having a fulcrum placed close to the jointing element between the abutment **104** and the *pneumatic abutment* **102,** where the lever arm has a power component P approximately equal to 1/3 and a resistance component R approximately equal to 2/3.

In order to increase the degree of stability and robustness of the structure, said jointing element, connecting said *abutment* **104** to said *pneumatic abutment* **102,** is represented by a first *nut and bolt system.*
In particular, the *pneumatic abutment* **102** presents at one end an outer radial thread **107** - working as a *nut,* to which a complementary inner radial thread **108** can be screwed, belonging to the abutment **104** and working as a *bolt.*
In such a way, the two elements pneumatic abutment **102** and abutment **104** can be steadily connected and jointed each other.

In order to further increase the degree of stability and robustness of the structure, said element, connecting the couple of said *abutment* **104** and *pneumatic abutment* **102** to said *screw implant* **101,** is represented by a second *nut and bolt system* that is independent in respect to the first one.

In particular, *the screw implant* **101** presents at one end an outer radial thread **109** - working as a *nut,* to which can be screwed a complementary inner radial thread **110,** belonging to a ring **105** and working as a *bolt.*

The pneumatic abutment **102** presents a radial protruding element **111** on its outer surface, having a cross-section shaped as an hexagon, so that said *screw implant* **101** and ring **105** can be steadily connected and jointed each other, intercepting at the same time said protruding element **111** inside, keeping consequently the couple of said *abutment* **104** and *pneumatic abutment* **102** steadily inside.

Another mechanism has been introduced in order to avoid that rotary motions in the structure, arising from its use, could lead in the long term to the unscrewing of the implant **101** from the bone tissue and/or the unscrewing, or the break down, of the clamping screw between the implant **101** and the abutment **104.**

In particular, an additional element has been installed, called *closing gasket* **106,** having a shape as a cross. The *closing gasket* **106** is placed between said ring **105** and *abutment* **104,** and it fits into a housing, having a complementary shape achieved on the upper surface of said ring **105.** The *closing gasket* **106** placed into its housing into said ring **105** prevents that a rotation of the couple of said *abutment* **104** and *pneumatic abutment* **102,** around its longitudinal axis, can be transmitted to the couple of said *screw implant* **101** and ring **105.**

This fact leads as a consequence two significant structural advantages: a possible rotary motion does not affect the stability and robustness of said *screw implant* **101** inside the bone; and a possible rotary motion does not affect either the stability of the clamping screw in the couple of said *abutment* **104** and *pneumatic abutment* **102.**

Considering that a natural tooth has a proper 'pneumatic' function, that means that a tooth has connective tissues around its roots (*periodontium*) absorbing forces generated from a chewing activity, an additional mechanism has been implemented that achieves to decrease the vertical and/or lateral forces that affect the whole device.

In particular, an additional element has been installed, called *pneumatic rubber plug* **103,** made of an elastic rubber and shaped as a cylinder. The *pneumatic rubber plug* **103** is inserted at the basis and inside said *screw implant* **101,** and said *pneumatic abutment* **102** is placed on the top of it.

This fact permits to implement a natural function of a tooth in the implant, being damped in respect to some vertical and/or lateral forces, can be implemented in the whole implant.

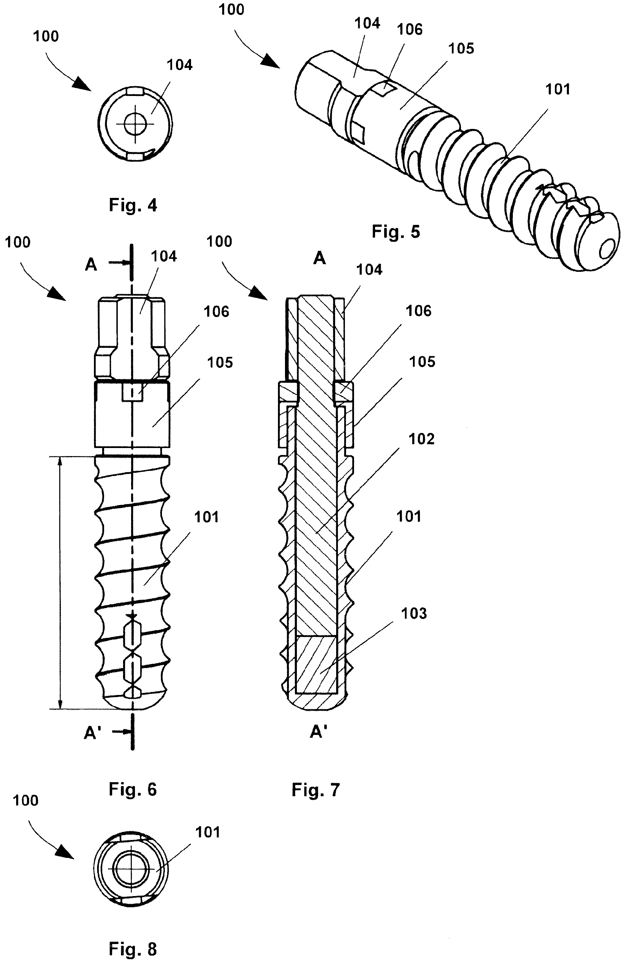

In **Figures 4 - 8** the same dental surgical device **100** of the present invention is represented according to different views, in a configuration that is completely disassembled. The components of the device **100** are clearly visible in the different figures, in their operative position: implant with *screw implant* **101;** *pneumatic abutment* **102;** *pneumatic rubber plug* **103;** *abutment* **104;** *ring* **105;** *closing gasket* **106**

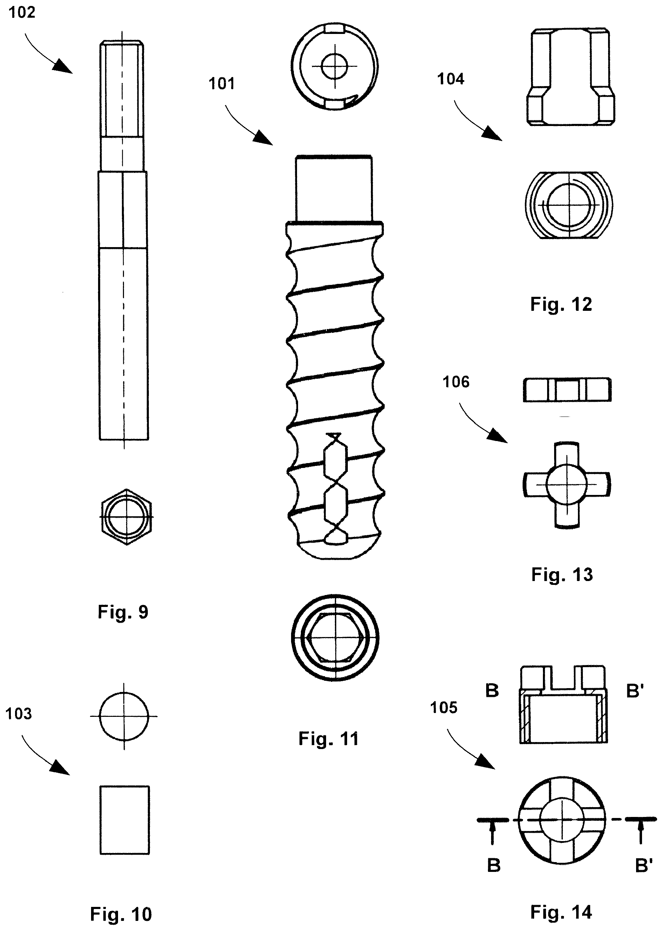

**Figure 9** shows in detail the *pneumatic abutment* **102.**

**Figure 10** shows in detail the *pneumatic rubber plug* **103.**

**Figure 11** shows in detail the implant with *screw implant* **101.**

**Figure 12** shows in detail the *abutment* **104.**

**Figure 13** shows in detail the *closing gasket* **106.**

**Figure 14** shows in detail the *ring* **105.**

The installation of a dental surgical device **100** follows two different phases, that happen at different times: a first phase that is more invasive, where a hole is made into the bone of a patient, and an implant screw is inserted, and a second phase where, after a healing process, the screw has been perfectly integrated into the bone and biological tissues, and the abutment with related coverings is installed in order to achieve a dental prosthesis.

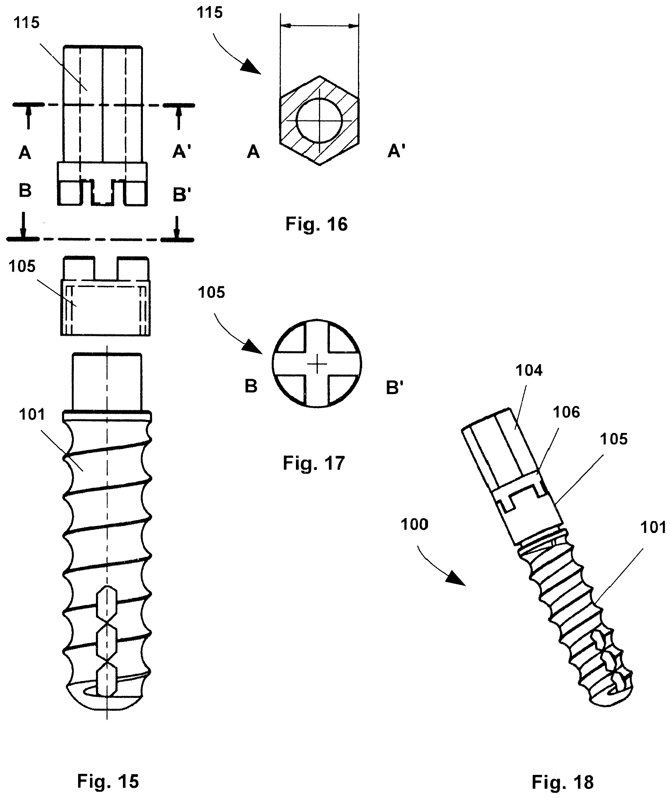

In particular, **Figures 15-18** show the components that allow the installation of the *implant screw* **101** during the first phase. There is a closing ring 105 properly modified in order to close completely the inner side of the *implant screw* **101,** and to stay installed all during the time of the healing.

In order to provide the installation of the *implant screw* **101** inside a hole previously achieved in the bone of a patient, it is used an *adapter* **115** *for an allen wrench.*

The *adapter* **115** is properly shaped at its lower side in order to adapt to the housing placed on the top of said closing ring **105,** enabling the transmission of a rotary screwing motion provided by said allen wrench.

Therefore, the above examples show that the present invention reaches all the expected objectives. In particular, it permits to achieve a dental surgical device, having a monophasic *abutment* directed along a vertical direction, and having a balanced lever arm with a power component P approximately equal to 1/3 and a resistance component R approximately equal to 2/3.

Furthermore, the invention implements a mechanism in order to avoid rotary motion in the structure arising from its use, that could lead in the long term to the unscrewing of the implant in the bone tissue and/or the unscrewing, or break down, of the clamping screw between the implant and the abutment.

Further according to the invention, an additional mechanism decreases the vertical and/or lateral forces that affect the whole device, by implementing a function similar to the natural one of the tooth, that has connective tissues around its roots (*periodontium*) absorbing forces generated from a chewing activity.

The present invention has been described by making reference to some non limiting examples and following some preferred embodiments; however it goes without saying that modifications and/or changes could be introduced by those skilled in the art without departing from the relevant scope, as defined in the enclosed claims.

## Claims

1. Dental surgical device (100), comprising a pneumatic implant screw having an outer ring, said pneumatic implant screw comprising:
- a main body, called *implant screw* (101), that is inserted into the dental arch bone of a patient;
- an element called *abutment* (104);
- an inner element, called *pneumatic abutment* (102) that, it is inserted at its lower side into said *implant screw* (101) and it is connected at its upper side to said *abutment* (104);
- an element, represented by a clamping screw, that connects said *abutment* (104) to said *pneumatic abutment* (102),
where said *pneumatic abutment* (102) has a proper length in order to be inserted deep into said *implant screw* (101), so that a balanced lever arm can be achieved, having a fulcrum placed close to the element between the abutment (104) and the *pneumatic abutment* (102), where the lever arm has a power component P approximately equal to 1/3 and a resistance component R approximately equal to 2/3, in respect to the length of all the dental surgical device (100),
where said element, connecting said *abutment* (104) to said *pneumatic abutment* (102), is represented by a first *nut and bolt system,* where the *pneumatic abutment* (102) presents at one end an outer radial thread (107) - working as a *nut,* to which a complementary inner radial thread (108) can be screwed, belonging to the abutment (104) and working as a *bolt,*
so that the two elements *pneumatic abutment* (102) and *abutment* (104) can be steadily connected and jointed each other, in order to increase the degree of stability and robustness of the structure,
**characterized in that**:
- said element, connecting the couple of said *abutment* (104) and *pneumatic abutment* (102) to said *screw implant* (101), is represented by a second *nut and bolt system* that is independent in respect to the first one, where the *screw implant* (101) presents at one end an outer radial thread (109) - working as a *nut,* to which a complementary inner radial thread (110) can be screwed, belonging to a ring (105) and working as a *bolt;* the pneumatic abutment (102) presents a radial protruding element (111) on its outer surface, having a cross-section shaped as an hexagon, so that said *screw implant* (101) and ring (105) can be steadily connected and jointed each other, intercepting at the same time said protruding element (111) inside, keeping consequently the couple of said *abutment* (104) and *pneumatic abutment* (102) steadily inside, in order to increase the degree of stability and robustness of the structure.

2. Dental surgical device (100), comprising a pneumatic implant screw having an outer ring, according to previous claim 1, **characterized in that** comprising:
- an additional element, called closing gasket (106), having a shape as a cross; said closing gasket (106) is placed between said ring (105) and *abutment* (104), and it fits into a housing, having a complementary shape achieved on the upper surface of said ring (105); said closing gasket (106) placed into its housing into said ring (105) prevents that a rotation of the couple of said *abutment* (104) and *pneumatic abutment* (102), around its longitudinal axis, can be transmitted to the couple of said *screw implant* (101) and ring (105),
so that a possible rotary motion does not affect the stability and robustness of said *screw implant* (101) inside the bone, and a possible rotary motion does not affect either the stability of the clamping screw in the couple of said *abutment* (104) and *pneumatic abutment* (102).
